# EUROPEAN PATENT SPECIFICATION

(11) **EP 3 174 075 B1**
(45) Date of publication and mention of the grant of the patent: **05.09.2018**
(21) Application number: 16020456.6
(22) Date of filing: 22.11.2016
(51) Int. Cl.: H01F 27/32, H01F 37/00

(54) **REACTOR**
REAKTOR
RÉACTEUR

(30) Priority: 25.11.2015 JP 2015229733
(43) Date of publication of application: 31.05.2017
(73) Proprietor: Sumida Corporation, Tokyo 104-8547 (JP)
(72) Inventor: YAMADA, Takao Hiroyuki, Natori-city, Miyagi 981-1226 (JP); MIYAZAKI, Hiroyuki, Natori-city, Miyagi 981-1226 (JP); KANEKO, Tomoyuki, Natori-city, Miyagi 981-1226 (JP)
(74) Representative: Schäfer, Matthias W.

(56) References cited:
- JP-A- 2009 246 220
- JP-A- 2010 245 457
- JP-A- 2015 130 372

## Description

### {Technical Field}

The present invention relates to a reactor or inductor used in an electrical power circuitry.

### {Background Art}

In recent years, a reactor is used broadly for a converter of a hybrid vehicle, a power conditioner of a solar power generation system, and the like. As such a reactor, there is one disclosed in PTL 1, for example. According to PTL 1, since a coil made by winding a flat wire of a metal conductor has spring nature basically, it possibly becomes extended or contracted to cause characteristics of the reactor fluctuate. Further, it is necessary to ensure insulation of the coil from a core. Therefore, in the structure disclosed in PTL 1, a bobbin is fitted in each of end portion sides of the coil to prevent the characteristic fluctuations and ensure the insulation between the coil and the core.

### {Citation List}

### {Patent Literature}

{PTL 1} JP 5105079 B

### {Summary of Invention}

### {Technical Problem}

By the way, in the structure of PTL 1, projecting frame portions (inner peripheral walls) exist on the inner peripheral side. However, the bobbin having only such projecting frame portions is not sufficient to maintain an interval between coils and an interval between cores. Thus, the characteristics of the reactor vary due to the variations in distance between the coils and the variations in distance between the cores, resulting in that dispersion of quality may be caused. Further, when the variations in distance between the coils occur, the insulation between the coils may become insufficient.

The present invention is made in view of such problems, and an object thereof is to provide a reactor capable of maintaining intervals between coils and between cores and capable of securely ensuring insulation between the coils.

### {Solution to Problem}

To solve the above-described problems, a reactor according to the present invention includes: a pair of columnar core bodies formed of a magnetic material; a pair of coils disposed on outer peripheral sides of the columnar core bodies and formed by winding a flat wire; and a bobbin including: inner peripheral walls for partitioning a center hole; outer peripheral walls provided at outer peripheral sides from the inner peripheral walls and facing the inner peripheral walls respectively; and bottom walls coupling the inner peripheral wall and the outer peripheral walls, to thereby form a first annular groove portion and a second annular groove portion each having a circular shape therein, for the pair of coils to be fitted into the first annular groove portion and the second annular groove portion respectively, in which: recessed wall portions, each having a shape recessed toward the center side of the bobbin, are provided at a portion of the outer peripheral walls where the first annular groove portion and the second annular groove portion face each other, and the recessed wall portions are each positioned on a side closer to the center than at least part of the inner peripheral walls.

The reactor of the present invention is preferable in that, plate-shaped cores, each formed of a magnetic material and being larger in area than the columnar core bodies, are stacked on the columnar core bodies to sandwich the columnar core bodies from both outer sides thereof in an axial direction, and positioning projections are provided on a side opposite to the first annular groove portion and the second annular groove portion of the bottom walls, contacting with the plate-shaped cores and separating the plate-shaped cores from the coils.

The reactor of the present invention is further preferable in that, a metal case is provided for covering the columnar core bodies, the coils, and the bobbin, and outer peripheral projections are provided on the outer peripheral walls respectively, projecting in a direction apart from the inner peripheral walls to separate the coils from the case.

The reactor of the present invention is further preferable in that the outer peripheral walls have a height lower than a height of the inner peripheral walls.

The present invention is further preferable in that fixing means are provided on both outer sides in the axial direction of the pair of plate-shaped cores, and the columnar core bodies, the coils, the bobbin, and the plate-shaped cores are sandwiched by the pair of fixing means.

### {Advantageous Effects of Invention}

According to the present invention, it makes it possible for the reactor to maintain intervals between coils and between cores and securely ensure insulation between the coils.

### {Brief Description of Drawings}

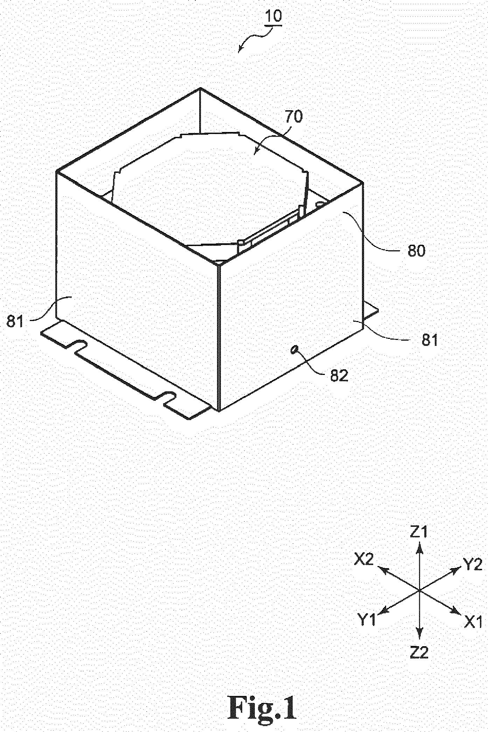

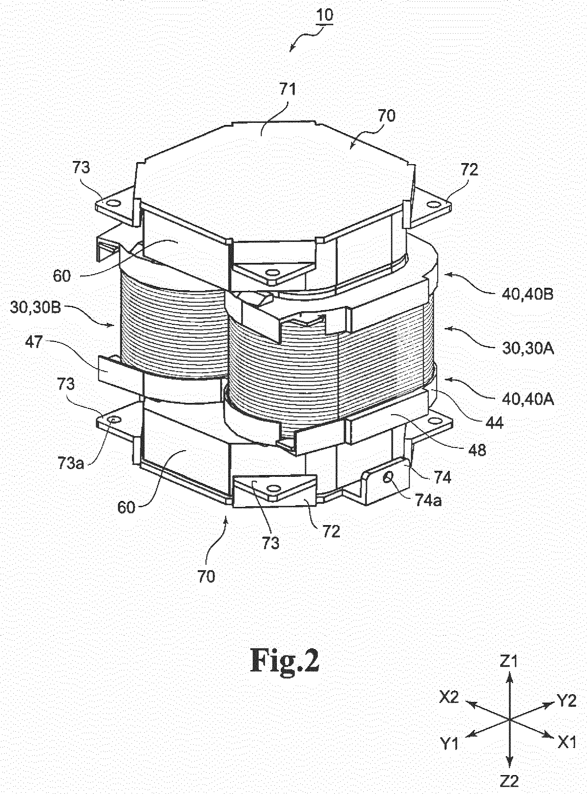

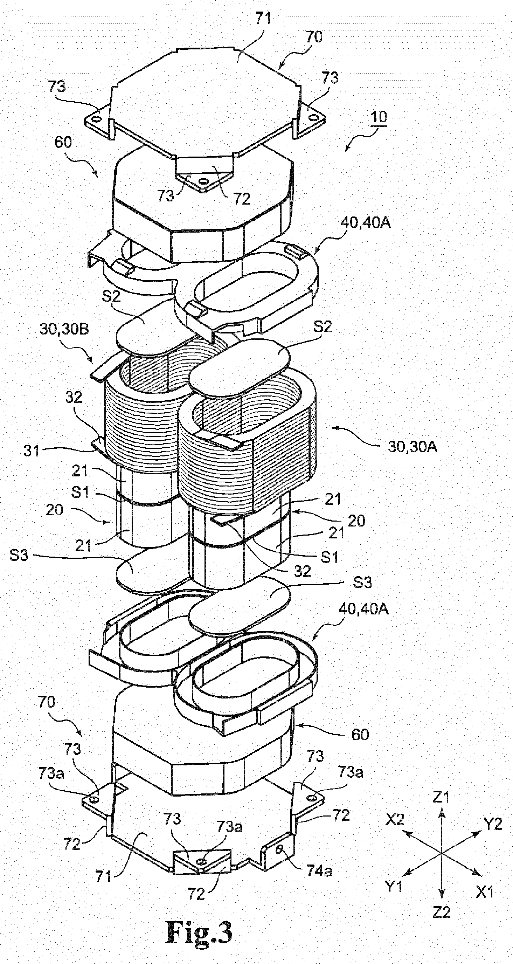

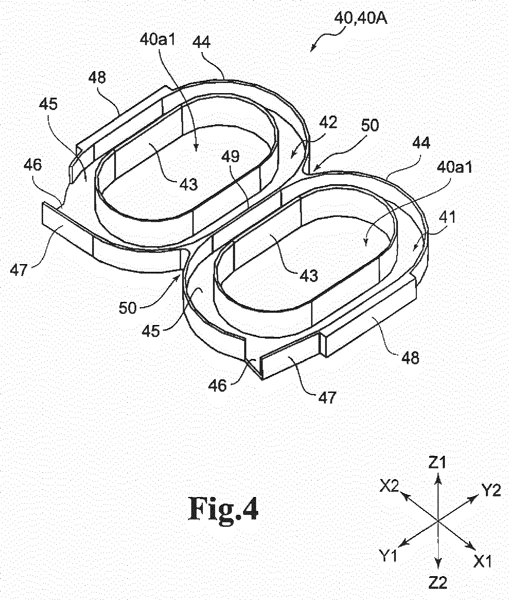

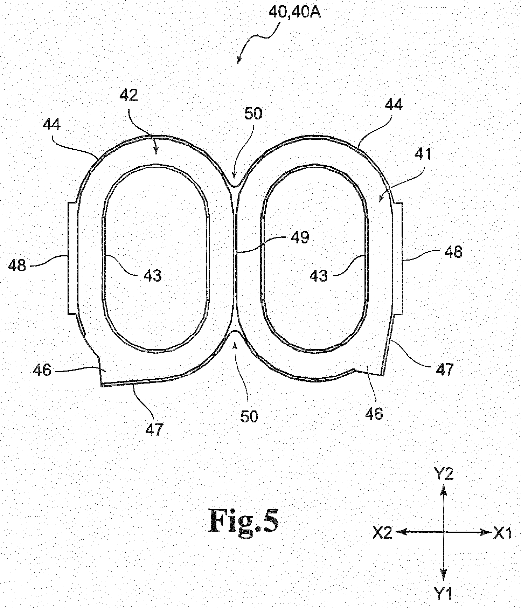

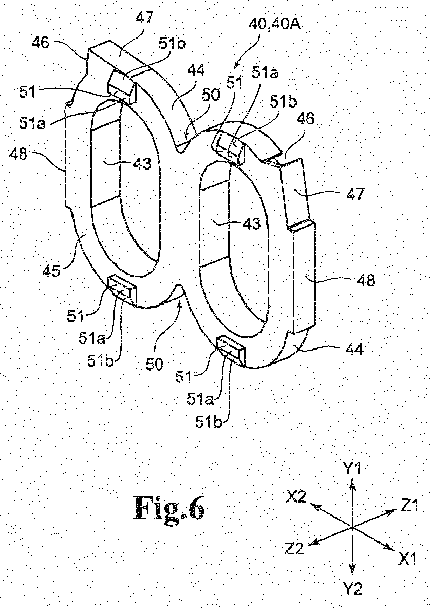

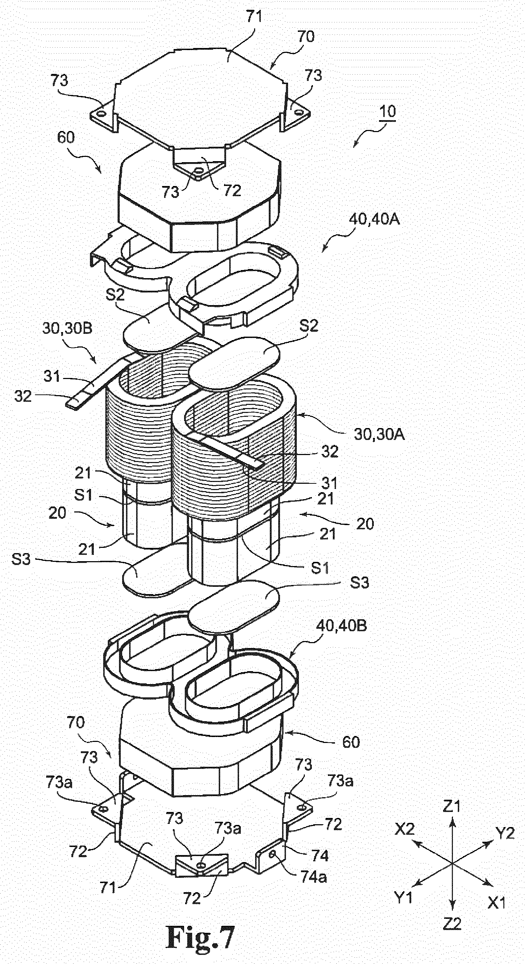

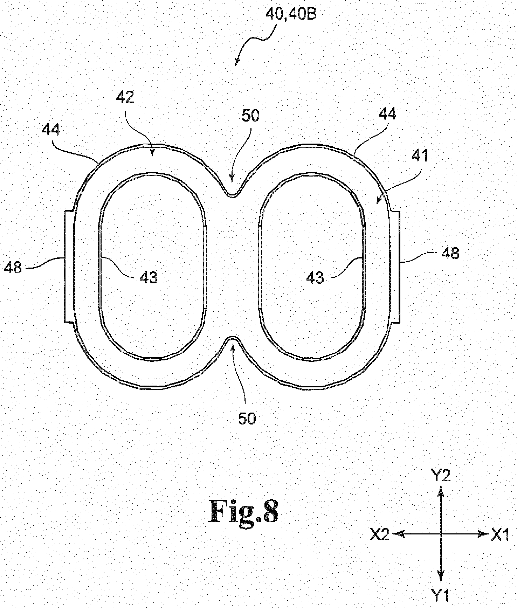

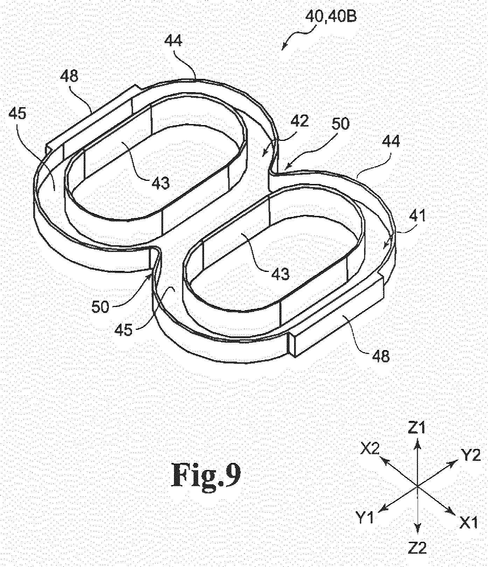

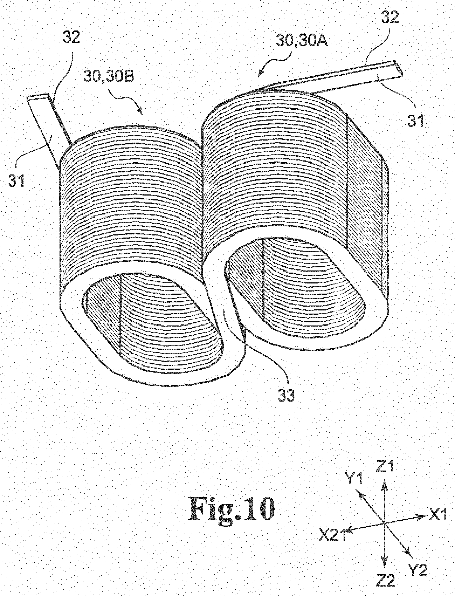

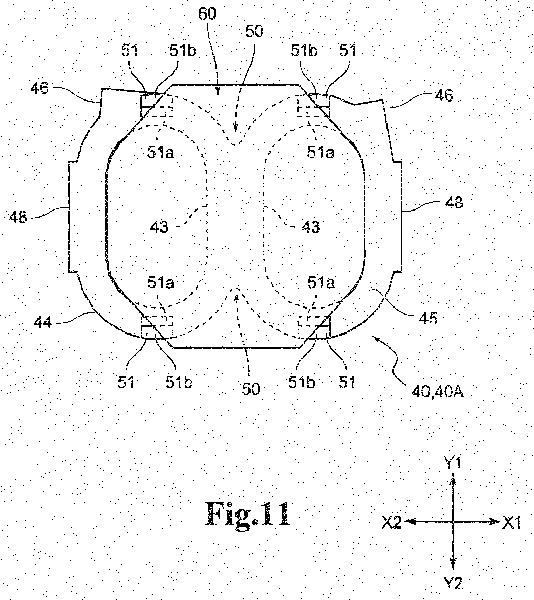

{Fig. 1} FIG. 1 is a perspective view illustrating a structure of a reactor according to one embodiment of the present invention;
{Fig. 2} FIG. 2 is a perspective view illustrating the structure of the reactor according to the embodiment of the present invention, and is a view illustrating a structure obtained after a case is removed;
{Fig. 3} FIG. 3 is an exploded perspective view illustrating the structure of the reactor in FIG. 1 and illustrates a state where the case is removed;
{Fig. 4} FIG. 4 is a perspective view illustrating a shape of a bobbin positioned on a lower side in the reactor in FIG. 1;
{Fig. 5} FIG. 5 is a plan view illustrating the shape of the bobbin positioned on the lower side in the reactor in FIG. 1;
{Fig. 6} FIG. 6 is a perspective view illustrating a lower surface side shape of the bobbin in the reactor in FIG. 1;
{Fig. 7} FIG. 7 is an exploded perspective view illustrating the structure of the reactor in FIG. 1, and is a view illustrating the state where the case is removed and illustrating a constitution in which a bobbin of a type different from the bobbin illustrated in FIG. 4 and FIG. 5 is used and a pair of coils is formed of a single flat wire;
{Fig. 8} FIG. 8 is a perspective view illustrating a shape of the bobbin of the type different from the bobbin illustrated in FIG. 4 and FIG. 5;
{Fig. 9} FIG. 9 is a plan view illustrating the shape of the bobbin of the type different from the bobbin illustrated in FIG. 4 and FIG. 5;
{Fig. 10} FIG. 10 is a perspective view illustrating a state where the pair of coils illustrated in FIG. 7 is seen from the lower surface side; and
{Fig. 11} FIG. 11 is a bottom view illustrating a state where a bobbin 40A side is seen from a plate-shaped core 60 side, and is a view illustrating the positional relation with the bobbin in the reactor in FIG. 1.

### {Description of Embodiments}

Hereinafter, a reactor 10 according to one embodiment of the present invention will be explained based on the drawings.

Note that in the following explanation, it is assumed that the axial direction of coils 30 and columnar core bodies 20 is the vertical direction (Z-direction), the side covered with a case 80 is a Z1 side (upper side), and the opening side of the case 80 opposite thereto is a Z2 side (lower side). It is further assumed that in FIG. 2 and FIG. 3, the direction in which the pair of coils 30 is arranged side by side is an X-direction, the right front side in FIG. 2 and FIG. 3 is an X1 side, and the side opposite thereto is an X2 side. It is further assumed that the direction perpendicular to the X-direction and the Z-direction is a Y-direction, and the right far side in FIG. 1 to FIG. 3 is a Y1 side and the left front side opposite thereto is a Y2 side.

### <Regarding Structure of Reactor 10>

FIG. 1 is a perspective view illustrating the structure of the reactor 10. FIG. 2 is a perspective view illustrating the structure of the reactor 10 and is a view illustrating the state where the case 80 is removed. FIG. 3 is an exploded perspective view illustrating the structure of the reactor 10 in FIG. 1 and illustrates the state where the case 80 is removed. As illustrated in FIG. 1 to FIG. 3, the reactor 10 includes: the columnar core bodies 20; the pair of coils 30; bobbins 40; plate-shaped cores 60; fixing brackets 70; and the metal case 8 as major components.

The columnar core body 20 is formed of a magnetic material such as a ferrite, amorphous, or silicon steel plate. Incidentally, of these magnetic materials, a compact core having an increased density may be formed. Further, in the structure illustrated in FIG. 2 and FIG. 3, the columnar core body 20 is formed by columnar core members 21, each of which has a shape when seen in a plan view of an oval shape such as a rounded rectangle, being butted each other. However, the shape of the columnar core body 20 when seen in a plan view may be another shape such as a circular shape, an elliptical shape, or a rectangular shape, for example.

Here, between butted surfaces of the two core members 21, a gap is formed to make a spacer S1 for adjusting an inductance exist, but the core members 21 may be butted each other directly without the spacer S1 existing therebetween. The spacer S1 is formed of a material having electrical insulation performance such as resin, for example. Further, the two core members 21 are also the same in height. However, these two core members 21 may be different in height.

Further, on the top surface of the columnar core body 20, a spacer S2 is disposed, and on the bottom surface of the columnar core body 20, a spacer S3 is disposed. Such spacers S2 and S3 are also formed of a material having electrical insulation performance such as resin, similarly to the above-described spacer S1.

Further, on the outer peripheral sides of the columnar core bodies 20, the paired coils 30 are disposed respectively. The pair of coils 30 is formed by winding a flat wire 31. At this time, a bending portion of the flat wire 31 is formed by edgewise bending, but in the Y-direction (width direction), the coil 30 is provided so that the shape of the coil 30 when seen in a plan view includes semicircular-shaped portions by edgewise bending. However, as for the edgewise bending, the flat wire 31 may be bent so as to form various angles such as 90 degrees, for example, other than the semicircular shape.

In this embodiment, as illustrated in FIG. 2 and FIG. 3, the paired coils 30 are each in an independent state, and a constitution in which two terminals 32 exist in the single coil 30 is made. Thus, it is possible to connect the coils 30 in series or in parallel by using these terminals 32.

However, the pair of coils 30 may be formed by winding the single flat wire 31. In this case, the two (paired) coils 30 are formed by winding the single flat wire 31, and the formation is started from the terminal 32 of the one coil 30, and then moves to the other coil 30 via a connecting wire part to be finished at the terminal 32 of the other coil 30B.

Note that in this embodiment, the winding direction of the one coil 30 (the coil 30 on the X1 side; to be referred to as coil 30A) and the winding direction of the other coil 30 (the coil 30 on the X2 side; to be referred to as coil 30B) are the same direction. Concretely, in the structure illustrated in FIG. 2 and FIG. 3, each of the coils 30 is formed by winding the flat wire 31 counterclockwise, for example, from the terminal 32 side of the lower side (Z2 side). However, the two coils 30A and 30B each may be formed by winding the flat wire 31 clockwise, for example, from the terminal 32 side of the lower side (Z2 side). Further, both the coils 30A and 30B may be formed in a manner that as for one of the coils 30A and 30B, the flat wire 31 is wound clockwise from the terminal 32 side of the lower side (Z2 side) and as for the other of them, the flat wire 31 is wound counterclockwise from the terminal 32 side of the lower side (Z2 side).

Note that when the coils 30A and 30B are seen in a plan view, they are each provided in an oval shape such as a rounded rectangle having a linear portion similarly to the columnar core bodies 20. However, the shape when the coils 30A and 30B are each seen in a plan view may be another shape such as a circular shape, an elliptical shape, or a rectangular shape, for example.

Further, the terminals 32 of the one coil 30A and the terminals 32 of the other coil 30B are positioned on the lower side (Z2 side) and are also positioned on the upper side (Z1 side). That is, in each of the coils 30A and 30B, the positions of the terminals 32 in the vertical direction (Z-direction) are different.

Note that an insulating process is performed on the outer peripheral side of each of the coils 30A and 30B. Concretely, a tape having electrical insulation performance is applied on the outer peripheral side of each of the coils 30A and 30B, to ensure the electrical insulation performance. However, in place of applying the tape on the outer peripheral side of each of the coils 30A and 30B, for example, by varnish impregnation or the like, the insulation performance of the coils 30A and 30B may be ensured. Further, together with the varnish impregnation process, the tape may be applied on the outer peripheral side of each of the coils 30A and 30B.

Next, the bobbins 40 are explained. FIG. 4 is a perspective view illustrating the shape of a bobbin 40A positioned on the lower side (Z2 side). FIG. 5 is a plan view illustrating the shape of the bobbin 40A positioned on the lower side (Z2 side). Note that a bobbin 40A positioned on the upper side (Z1 side) is also the same in shape basically (but in terms of the positional relation, they are vertically symmetrical to each other), and therefore its explanation is omitted.

As illustrated in FIG. 4 and FIG. 5, the bobbin 40 is provided to form a shape of glasses in its external appearance. Concretely, the bobbin 40 includes a pair of center holes 40a1, and around the respective center holes 40a1, a first annular groove portion 41 and a second annular groove portion 42 are provided. The first annular groove portion 41 and the second annular groove portion 42 both include: an inner peripheral wall 43; an outer peripheral wall 44; and a bottom wall 45. Then, the first annular groove portion 41 having a recessed groove shape is formed by being surrounded by the inner peripheral wall 43, the outer peripheral wall 44, and the bottom wall 45, and the second annular groove portion 42 having a recessed groove shape is similarly formed by being surrounded by the inner peripheral wall 43, the outer peripheral wall 44, and the bottom wall 45.

Here, the inner peripheral wall 43 is a portion positioned between the columnar core body 20 and the coil 30, thereby preventing the columnar core body 20 and the coil 30 from directly coming into contact with each other. Note that the first annular groove portion 41 and the second annular groove portion 42 are just referred to as annular groove portions 41 and 42 when it is unnecessary to distinguish them from each other in particular.

Here, in each of the first annular groove portion 41 and the second annular groove portion 42 of the bobbin 40A, a lead-out portion 46 is provided. The lead-out portion 46 is an opening portion for leading out the terminal 32 of the coil 30 from the annular groove portion 41 or the annular groove portion 42, and is provided in a shape made by cutting out the outer peripheral wall 44. In the constitution illustrated in FIG. 4 and FIG. 5, the respective lead-out portions 46 are both provided on the front side (Y1 side) in the major axis direction (Y-direction) of the coils 30. However, the paired lead-out portions 46 may be provided on the far side (Y2 side) in the major axis direction (Y-direction) of the coils 30, or a constitution in which the one lead-out portion 46 is provided on the front side (Y1 side) and the other lead-out portion 46 is provided on the far side (Y2 side) may be applied.

Further, in the constitution illustrated in FIG. 4, the lead-out portions 46 are provided in places close to both ends in the X-direction, to separate the respective terminals 32 from each other. Here, in this embodiment, the one coil 30A and the other coil 30B are both formed by winding the flat wire 31 counterclockwise from the terminal 32 side of the lower side (Z2 side). Thus, the lead-out portion 46 of the annular groove portion 42 is provided to make the terminal 32 extend to the outside in a state facing the X2 side. Further, the lead-out portion 46 of the annular groove portion 41 is provided to make the terminal 32 extend to the outside in a state facing the Y1 side.

Incidentally, as is clear from FIG. 4 and FIG. 5, in the vicinity of each of the lead-out portions 46 of the bobbin 40A, there is provided a guide wall portion 47 guiding the terminal 32 to extend to the outside. The guide wall portion 47 is a portion in which the outer peripheral wall 44 near the lead-out portion 46 is formed into a linear wall so as to direct the terminal 32 to the outside in the extending direction.

Here, in this embodiment, the outer peripheral walls 44 are each provided to make the height thereof become lower than the height of the inner peripheral wall 43. This is due to the following reasons.

That is, when the outer peripheral wall 44 does not exist at all tentatively, a place that is not insulated sufficiently is formed at the lower side (Z2 side) of the coil 30. This is because in this embodiment, a tape is applied on the outer peripheral side of the coil 30, thereby ensuring the electrical insulation performance of the coil 30, but at the endmost portion of the coil 30, the flat wire 31 is not stacked on one side (the lower side in this case; Z2 side), and thus the endmost portion is not fixed by the tape and the insulation is liable to be cancelled. Further, at the endmost portion side of the coil 30, the region where the tape is applied is smaller than any other region due to existence of the portion to lead out the terminal 32 to the outside, or the like. Thus, providing the outer peripheral wall 44 ensures the insulation performance at the lower side (Z2 side) of the coil 30.

On the other hand, when the height of the outer peripheral walls 44 is equal to the height of the inner peripheral wall 43, or is increased more than that, the coils 30 are not easily fitted into the first annular groove portion 41 and the second annular groove portion 42. Thus, in order for the coils 30 to be fitted into the first annular groove portion 41 and the second annular groove portion 42 easily while ensuring the insulation performance at the lower side (Z2 side) of the coils 30, the height of the outer peripheral walls 44 is made lower than the height of the inner peripheral wall 43.

Further, of the outer peripheral walls 44, on each of the sides where the first annular groove portion 41 and the second annular groove portion 42 are not adjacent to each other (separated sides), an outer peripheral projection 48 is provided. The outer peripheral projection 48 is a portion for ensuring a space between the case 80 and the coil 30. Concretely, the outer peripheral projection 48 is formed by increasing one portion of the outer peripheral wall 44 in thickness rather than the other portion of the outer peripheral wall 44. Furthermore, the outer peripheral projection 48 is set to have a thickness that prevents the case 80 from coming close to the coil 30 without maintaining a specific distance therebetween. This is because when the case 80 comes close to the coil 30 without maintaining a specific distance therebetween, variations are caused in the characteristics of the reactor 10.

In this embodiment, the outer peripheral projections 48 are each provided on the linear portion of the outer peripheral wall 44. Therefore, the outer peripheral projection 48 has a long shape long in the Y-direction. However, such another constitution as a plurality of ones short in length in the Y-direction, for example, are provided along the Y-direction may be employed for the outer peripheral projection 48. Further, in the constitution illustrated in FIG. 4 and FIG. 5, the outer peripheral projections 48 are each provided integrally with the outer peripheral wall 44. However, the outer peripheral projection 48 may be provided separately from the outer peripheral wall 44 and may be formed in a manner to be retrofitted to the outer peripheral wall 44.

Further, in the bobbin 40A, recessed wall portions 50 are provided. Each of the recessed wall portions 50 has such a shape as, of the outer peripheral walls 44 of the bobbin 40A, the portion where the first annular groove portion 41 and the second annular groove portion 42 face each other is recessed toward the center side of the bobbin 40A. As for the degree of such a recess, as illustrated in FIG. 5, the recessed wall portions 50 are each provided so that the recess is positioned to the center side rather than the inner peripheral wall 43 positioned at the endmost portion side in the Y-direction. Thus, each angular displacement in the coils 30A and 30B is well prevented.

Here, there is created the following merit when the recessed wall portions 50 exist. That is, at the lower side (Z2 side) of the coil 30A and the coil 30B, a potential difference is often high. When at such a place having a high potential difference, a surface displacement and an angular displacement such as a bending angle displacement at an edgewise bending portion occur, the distance between the two coils 30A and 30B varies, to thereby cause the variations in characteristics of the reactor 10, which may cause the dispersion of quality.

However, by the recessed wall portions 50 being provided in the bobbin 40A, the interval between the one coil 30A and the other coil 30B is maintained appropriately and parallel while correcting the surface displacement in each of the coils 30A and 30B and the angular displacement such as a bending angle displacement at an edgewise bending portion. Thus, it becomes possible to prevent the variations in the distance between the two coils 30A and 30B. This prevents the characteristics of the reactor 10 from varying to thereby suppress the dispersion of quality.

Note that the recessed wall portions 50 are provided in a pair along the Y-direction as illustrated in FIG. 4 and FIG. 5. Then, a partition wall 49 is also provided so as to connect these paired recessed wall portions 50. This prevents the terminals 32 of the adjacent coils 30 from coming into contact with each other.

FIG. 6 is a perspective view illustrating the shape of the lower surface side (surface side of the Z2 side; rear surface side) of the bobbin 40A. Note that the bobbin 40A positioned on the upper side (Z1 side) is also the same in shape basically, but an explanation is conducted based on the bobbin 40A positioned on the lower side (Z2 side) here.

As illustrated in FIG. 6, on the lower surface side of the bobbin 40A, positioning projections 51 are provided so as to project to the lower side (Z2 side). The positioning projection 51 is a portion for coming into contact with the plate-shaped core 60 to separate this plate-shaped core 60 from the coils 30. That is, when the plate-shaped core 60 comes too close to the coils 30, an eddy current loss increases. Thus, in order to securely separate the plate-shaped core 60 and the coils 30 by a constant distance or more to reduce the eddy current loss, the positioning projections 51 are provided.

Note that in the constitution illustrated in FIG. 6, the positioning projections 51 are each provided on the rear surface side of curve portions in the first annular groove portion 41 and the second annular groove portion 42. Additionally, the positioning projections 51 are each disposed at an angle of 90 degrees different from the outer peripheral projection 48 in the circumferential direction. Thus, the positioning projection 51 can be provided at four places in total, which further enables stable contacts with the portions near the outer edge of the surface of the plate-shaped core 60.

The positioning projections 51 each include an abutting portion 51a and a taper portion 51b as illustrated in FIG. 6. The abutting portion 51a is a portion to come into surface contact with the plate-shaped core 60, and is a portion most projecting in the positioning projection 51. Further, the taper portion 51b is an inclined wall connecting the abutting portion 51a and the bottom wall 45, and is a portion that gradually goes apart from the rear surface side of the bottom wall 45 from the bottom wall 45 side positioned at the outer peripheral wall 44 side to the abutting portion 51a positioned at the inner peripheral wall 43 side.

Note that in the case of using the bobbin 40A illustrated in FIG. 4 to FIG. 6, the paired coils 30 are independent of each other, and a constitution in which the two terminals 32 exist in the single coil 30 is made. However, the pair of coils 30 may be formed by winding the single flat wire 31. In this case, in the pair of coils 30 illustrated in FIG. 2 and FIG. 3, the side where no terminals 32 exist is formed on either the lower side (Z2 side) or the upper side (Z1 side). In this case, such a bobbin as illustrated in FIG. 4 to FIG. 6 may be used, but a bobbin 40B of a different type is preferably used.

Note that the reactor 10 using the pair of coils 30 formed by winding the single flat wire 31 is illustrated in FIG. 7. FIG. 7 is an exploded perspective view illustrating the structure of the reactor 10 in FIG. 1, and is a view illustrating the state where the case 80 is removed and illustrating a constitution in which the bobbin 40B of a type different from the bobbin 40A illustrated in FIG. 4 and FIG. 5 is used and the pair of coils 30 is formed of the single flat wire 31. FIG. 8 is a perspective view illustrating the shape of the bobbin 40B of the type different from the bobbin 40A illustrated in FIG. 4 and FIG. 5. FIG. 9 is a plan view illustrating the shape of the bobbin 40B of the type different from the bobbin 40A illustrated in FIG. 4 and FIG. 5. Note that in the following explanation, the two bobbins 40A and 40B are just referred to as bobbins 40 when it is unnecessary to distinguish them from each other in particular. Further, the structure illustrated in FIG. 3 and the structure illustrated in FIG. 7 are both applicable to the reactor 10 illustrated in FIG. 1 basically.

As illustrated in FIG. 7 to FIG. 9, the bobbin 40B does not include the lead-out portions 46 for leading out the terminal 32 of the coil 30 to the outside, unlike the bobbin 40A of the type illustrated in FIG. 4 and FIG. 5. Further, the bobbin 40B does not also include the guide wall portions 47 guiding the terminal 32 to extend to the outside. Thus, the bobbin 40B illustrated in FIG. 7 to FIG. 9 is suitable for the structure that does not include the terminals 32 existing on the upper side (Z1 side) or the lower side (Z2 side) of the pair of coils 30.

Note that in FIG. 7, the structure that does not include the terminals 32 existing on the lower side (Z2 side) of the pair of coils 30 is illustrated. Thus, in FIG. 7, the bobbin 40B is disposed on the lower side (Z2 side).

Further, the bobbin 40B does not also include the partition wall 49 for partition between the first annular groove portion 41 and the second annular groove portion 42. This is due to the following reasons. That is, when the paired coils 30A and 30B are formed by winding the single flat wire 31, the connecting wire part for connecting the two coils 30A and 30B exists, and such a connecting wire part exists between the adjacent coils 30A and 30B. Thus, in order for the connecting wire part to be positioned between the coils 30A and 30B, the bobbin 40B does not also include the partition wall 49 for partition between the first annular groove portion 41 and the second annular groove portion 42.

Here, in the reactor 10 illustrated in FIG. 7, the pair of coils 30 is formed by winding the single flat wire 31, and in this case, the connecting wire part that connects the coil 30A and the coil 30B (to be referred to as connecting wire part 33) has a constitution illustrated in FIG. 10. FIG. 10 is a perspective view illustrating the state where the pair of coils 30 illustrated in FIG. 7 is seen from the lower surface side (Z2 side). As illustrated in FIG. 10, the connecting wire part 33 connects the coil 30A and the coil 30B by performing edgewise bending. Then, the connecting wire part 33 extends in an oblique direction relative to the Y-direction so as to connect the adjacent first annular groove portion 41 and second annular groove portion 42 of the bobbin 40.

Note that for the above-described connecting wire part 33, a constitution in which a twisted portion requiring a dimension in the height direction (Z-direction) does not exist may be employed, or a constitution in which the twisted portion exists may be employed. When the constitution in which the twisted portion does not exist is employed, the dimension between the pair of coils 30 and the plate-shaped core 60 of the upper side (Z1 side) and the dimension between the pair of coils 30 and the plate-shaped core 60 of the lower side (Z2 side) are maintained substantially equally. Thus, it becomes possible to prevent deterioration of the balance in the vertical direction of the reactor 10, and thereby it is possible to prevent the characteristics of the reactor 10 from varying. On the other hand, when the constitution in which the twisted portion exists is employed, it is possible to align the direction of edgewise bending in the coil 30A and the direction of edgewise bending in the coil 30B (to apply right bending or left bending to both the coils 30A and 30B, for example). Thus, it is possible to prevent resetting of a processing machine to perform edgewise bending and further omit an additional constitution to the processing machine.

Next, the plate-shaped core 60 is explained. As illustrated in FIG. 2 and FIG. 3, the plate-shaped core 60 is a plate-shaped core member having a predetermined thickness. This plate-shaped core 60 is provided to have a shape in which corner portions of a rectangle are cut out as illustrated in FIG. 2 and FIG. 3. Therefore, the plate-shaped core 60 is provided to form an octagon in general when seen in a plan view. However, the shape of the plate-shaped core 60 when seen in a plan view may be another shape such as a circular shape, an elliptical shape, or a rectangular shape, for example.

Such a plate-shaped core 60 is disposed on each of the upper side (Z1 side) and the lower side (Z2 side) of the pair of columnar core bodies 20. Thus, a closed magnetic circuit can be formed by the pair of columnar core bodies 20 and the pair of plate-shaped cores 60. Note that the plate-shaped cores 60 are formed of the same magnetic material as the columnar core body 20. Here, the type of the magnetic material forming the plate-shaped core 60 may be the same type as the columnar core body 20, or may be a type different therefrom.

FIG. 11 is a bottom view illustrating the state where the bobbin 40A side is seen from the plate-shaped core 60 side, and is a view illustrating the positional relation with the bobbin 40A. As illustrated in FIG. 11, the plate-shaped core 60 is provided to abut on the abutting portions 51a of the positioning projections 51. Thereby, the position of the plate-shaped core 60 is determined, and thereby the distance between the pair of coils 30 and the plate-shaped core 60 is maintained.

Note that the spacers S2 and S3 are disposed between the plate-shaped core 60 on the upper side and the columnar core bodies 20 and between the plate-shaped core 60 on the lower side and the columnar core bodies 20 respectively. By disposing such spacers S2 and S3, a magnetic gap is formed, thereby making it possible to adjust the inductance. However, the plate-shaped core 60 on the upper side and the columnar core bodies 20 and the plate-shaped core 60 on the lower side and the columnar core bodies 20 may be directly butted each other without disposing the spacers S2 and S3 therebetween.

Further, on each of the plate-shaped cores 60, the fixing bracket 70 corresponding to a fixing means is attached. The fixing brackets 70 are each provided for performing positioning of the plate-shaped core 60 and fixing parts from the columnar core bodies 20 to the plate-shaped core 60. Concretely, the fixing bracket 70 is formed by pressing a metal plate or the like, and a plate portion 71 having a large area is provided in each of the fixing brackets 70.

Further, flange portions 72 are provided so as to rise from the outer edge of the plate portion 71. The outer peripheral surface of the plate-shaped core 60 abuts on such a plate portion 71, and thereby positioning of the plate-shaped core 60 is performed. In the structure illustrated in FIG. 2 and FIG. 3, the flange portion 72 is provided at four places in total, thereby making the positioning secure. However, the number of places where the flange portion 72 is provided is not limited to four, and the flange portion 72 may be provided at any number of places.

Incidentally, coupling fixing portions 73 are each provided so as to bend from the flange portion 72 while continuing to the flange portion 72. In the structure illustrated in FIG. 2 and Fig. 3, the coupling fixing portions 73 are provided to run substantially parallel to the plate portion 71, but do not have to be substantially parallel to the plate portion 71. An insertion hole 73a is provided in each of the coupling fixing portions 73, which enables insertion of a long coupling member. Examples of the coupling member include a round bar provided with thread grooves on both end sides thereof, and the like, but the coupling member may be another member. Further, the insertion holes 73a are not screw holes, but may be screw holes.

Then, positioning of the insertion hole 73a in the coupling fixing portion 73 on the upper side (Z1 side) and the insertion hole 73a in the coupling fixing portion 73 on the lower side (Z2 side) is performed, the both end sides of the coupling member are inserted through the insertion holes 73a, and then a nut or the like is screwed down on the both end sides of the coupling member, and thereby a state where the upper and lower fixing brackets 70 are coupled by the coupling member is made. Thus, the columnar core bodies 20, the coils 30, the bobbins 40, and the plate-shaped cores 60 that are positioned between the upper and lower fixing brackets 70 are sandwiched between these upper and lower fixing brackets 70 to be fixed. However, a constitution in which the upper and lower fixing brackets 70 are not coupled by the coupling member may be employed.

Further, case fixing portions 74 are also provided in the fixing bracket 70 on the lower side (Z2 side). The case fixing portions 74 are each provided so as to rise from the outer edge of the plate portion 71. Therefore, the case fixing portion 74 is provided so as to face the case fixing portion 74. Note that the case fixing portion 74 is provided at a place different from the coupling fixing portion 73 on the plate portion 71. Further, in the structure illustrated in FIG. 2 and FIG. 3, the case fixing portion 74 is provided at two places at 180-degree intervals, but any number of them may be provided.

In each of the case fixing portions 74, a screw hole 74a is provided. A screw is screwed into this screw hole 74a from the case 80 side, to thereby establish fixation between the fixing bracket 70 and the case 80. However, a through hole other than the screw hole 74a may be formed.

Further, the outer peripheral side of the reactor 10 is covered with the metal case 80. The case 80, in this embodiment, is provided to have a box shape with the lower side (Z2 side) surface being opened. Further, as for the case 80, two half cases 81 are put together, to thereby form the box-shaped case 80. In such a case 80, through holes 82 through which a screw is inserted are provided, and the through hole 82 is positioned to the screw hole 74a in the fixing bracket 70. Thus, a screw is inserted into the through hole 82 to be screwed thereinto, to thereby fix the case 80 to the fixing bracket 70.

Incidentally, a constitution in which such a case 80 is not provided but is omitted may be employed for the reactor 10.

### <Effects>

In the above structure, the reactor 10 includes: the pair of columnar core bodies 20; the pair of coils 30 disposed on the outer peripheral sides of the columnar core bodies 20; and the bobbins 40. Then, the bobbin 40 includes: the inner peripheral walls 43 for partitioning the center hole 40a1; the outer peripheral walls 44 facing the inner peripheral wall 43 on the outer peripheral side rather than the inner peripheral wall 43; and the bottom walls 45 connecting the inner peripheral wall 43 and the outer peripheral wall 44, to thereby form the circular first annular groove portion 41 and second annular groove portion 42 therein. Further, the paired coils 30 are fitted into the first annular groove portion 41 and the second annular groove portion 42 respectively. Then, at the portion of the outer peripheral walls 44, where the first annular groove portion 41 and the second annular groove portion 42 face each other, the recessed wall portions 50 each having a shape recessed toward the center side of the bobbin 40 are provided, and the recessed wall portion 50 is positioned at the side closer to the center than at least part of the inner peripheral wall 43.

For this reason, it is possible to maintain the interval between the one coil 30A and the other coil 30B appropriately and parallel while correcting a surface displacement in each of the coils 30A and 30B and an angular displacement such as a bending angle displacement at an edgewise bending portion. Thus, it becomes possible to prevent the variations in the distance between the two coils 30A and 30B. This makes it possible to prevent the characteristics of the reactor 10 from varying, resulting in that it is possible to suppress occurrence of quality dispersion in the reactor 10.

Further, the variations in the distance between the paired coils 30A and 30B can be prevented, thereby making it possible to securely ensure the insulation between these paired coils 30A and 30B.

Further, in this embodiment, on the columnar core bodies 20, the plate-shaped cores 60 each larger in area than the columnar core bodies 20 are staked so as to sandwich them from both the outer sides in the axial direction (Z-direction). Moreover, on the side opposite to the first annular groove portion 41 and the second annular groove portion 42 of the bottom walls 45 of the bobbin 40, the positioning projections 51 are provided. These positioning projections 51 separate the plate-shaped core 60 from the respective coils 30 while being in contact with the plate-shaped core 60. For this reason, it is possible to securely separate the plate-shaped core 60 from the coils 30 by a constant distance or more, thereby enabling suppression of the increase in eddy current loss.

Further, in this embodiment, the reactor 10 includes the metal case 80, and with this case 80, the columnar core bodies 20, the coils 30, and the bobbins 40 are covered. Furthermore, on the outer peripheral walls 44 of each of the bobbins 40, the outer peripheral projections 48 to project in a direction apart from the inner peripheral wall 43 are provided, and by these outer peripheral projections 48, the coils 30 are separated from the metal case 80.

For this reason, it becomes possible to ensure a space with a constant distance or more between the metal case 80 and the coils 30. This makes it possible to prevent that the metal case 80 and the coils 30 come close to each other to cause variations in the characteristics of the reactor 10. Further, it becomes possible to further securely ensure the insulation between the metal case 80 and the coils 30.

Further, in this embodiment, the outer peripheral walls 44 are each provided to make the height thereof become lower than the height of the inner peripheral wall 43. Therefore, even at the end portions in the vertical direction (Z-direction) of the coils 30, where the electrical insulation tends to be insufficient, the insulation performance can be ensured by the existence of the outer peripheral walls 44. Additionally, when the height of the outer peripheral walls 44 is equal to the height of the inner peripheral wall 43 or is increased more than that, the coils 30 are not easily fitted into the first annular groove portion 41 and the second annular groove portion 42. However, when the outer peripheral walls 44 are each provided to make the height thereof become lower than the height of the inner peripheral wall 43 as described above, the coils 30 are easily fitted into the first annular groove portion 41 and the second annular groove portion 42. Thus, it is possible to improve assembly performance of the reactor 10 and improve production efficiency.

Further, in this embodiment, on each of both the outer sides in the axial direction rather than the paired plate-shaped cores 60 (on the side lower than the plate-shaped core 60 of the lower side and on the upper side rather than the plate-shaped core 60 of the upper side), the fixing bracket 70 is provided. Then, the columnar core bodies 20, the coils 30, the bobbins 40, and the plate-shaped cores 6 are sandwiched by the pair of fixing brackets 70. For this reason, the columnar core bodies 20, the coils 30, the bobbins 40, and the plate-shaped cores 6 can be sandwiched and fixed by the pair of fixing brackets 70, resulting in that it is possible to further securely prevent occurrence of distance variations among these.

### <Modification Examples>

In the foregoing, one embodiment of the present invention has been explained, but the present invention can be modified in various other ways. This will be described below.

In the above-described embodiment, the case where as a square wire, the flat wire 31 is used to form the coils 30 is explained. However, the square wire is not limited to the flat wire 31, and may be, for example, a square wire whose cross section is square or a square wire including an oval element such as an ellipse. Besides, in place of the square wire, a round wire may be used.

Further, in the above-described embodiment, the reactor, which is one kind of a coil part, is explained. However, the present invention may be applied to other coil parts. Examples of other coil parts are a transformer, a common mode choke coil, a normal mode choke coil, and the like.

Further, in the above-described embodiment, the case of using the pair of bobbins 40A and the case of using the bobbin 40A and the bobbin 40B in combination are explained. Besides, a bobbin in a different form may be used, or bobbins in different forms may be used in combination. For example, a pair of bobbins in a form in which the partition wall 49 is removed from the bobbin 40A may be used, or the bobbin in a form in which the partition wall 49 is removed from the bobbin 40A and either the bobbin 40A or the bobbin 40B may be used in combination.

Further, in the above-described embodiment, the bobbin 40 including the two annular groove portions of the first annular groove portion 41 and the second annular groove portion 42 as an annular groove portion is explained. However, the bobbin is not limited to the one including the two annular groove portions, and may employ a constitution including three or more annular groove portions. In this case, a constitution in which three or more coils are also included is made.

Further, in the above-described embodiment, the structure including the columnar core bodies 20 and the plate-shaped cores 60 is explained. However, in place of these, cores in different forms may be used. For example, in place of the columnar core bodies 20, bar-shaped cores may be used, and in place of the plate-shaped cores 60, bar-shaped cores may be used.

Further, in the above-described embodiment, the case of using the pair of fixing brackets 70 as a fixing means is explained. However, a means other than the fixing brackets 70 may be used. As a different fixing means, for example, brackets in a different form may be used, a belt and a wire may be used, or the metal case 80 may be used as a fixing means.

### {Reference Signs List}

10...reactor, 20...columnar core bodies, 21...core members, 30, 30A, 30B...coils, 31...flat wire, 32...terminals, 40, 40A, 40B...bobbins, 40a1...center hole, 41...first annular groove portion, 42...second annular groove portion, 43...inner peripheral walls, 44...outer peripheral walls, 45...bottom walls, 46...lead-out portions, 47...guide wall portions, 48...outer peripheral projections, 49...partition wall, 50...recessed wall portions, 51...positioning projections, 51a...abutting portions, 51b...taper portion, 60...plate-shaped cores, 70...fixing brackets (corresponding to fixing means), 71...plate portion, 72...flange portions, 73...coupling fixing portion, 73a...insertion holes, 74...case fixing portions, 74a...screw holes, 80...metal case, 81...half cases, 82...through hole, S1∼S3...spacers

## Claims

1. A reactor (10) comprising:
a pair of columnar core bodies (20) formed of a magnetic material;
a pair of coils (30) disposed on outer peripheral sides of the columnar core bodies (20) and formed by winding a flat wire (31); and
a bobbin (40) including: inner peripheral walls (43) for partitioning a center hole (40a1); outer peripheral walls (44) provided at outer peripheral sides from the inner peripheral walls (43) and facing the inner peripheral walls (43) respectively; and bottom walls (45) coupling the inner peripheral walls (43) and the outer peripheral walls (44), to thereby form a first annular groove portion (41) and a second annular groove portion (42) each having a circular shape therein, for the pair of coils (30) to be fitted into the first annular groove portion (41) and the second annular groove portion (42) respectively,
which is **characterised in that**:
recessed wall portions (50), each having a shape recessed toward the center side of the bobbin (40), are provided at a portion of the outer peripheral walls (44) where the first annular groove portion (41) and the second annular groove portion (42) face each other, and
the recessed wall portions (50) are each positioned on a side closer to the center than at least part of the inner peripheral walls (43).

2. The reactor according to claim 1, wherein:
plate-shaped cores (60), each formed of a magnetic material and being larger in area than the columnar core bodies, are stacked on the columnar core bodies (20) to sandwich the columnar core bodies (20) from both outer sides thereof in an axial direction, and
positioning projections (51) are provided on a side opposite to the first annular groove portion (41) and the second annular groove portion (42) of the bottom walls (45), contacting with the plate-shaped cores (60) and separating the plate-shaped cores (60) from the coils (30).

3. The reactor according to claim 1 or 2, wherein:
a metal case (80) is provided for covering the columnar core bodies (20), the coils (30), and the bobbin (40), and
outer peripheral projections (48) are provided on the outer peripheral walls (44) respectively, projecting in a direction apart from the inner peripheral walls (43) to separate the coils (30) from the case (80).

4. The reactor according to any one of claims 1 to 3, wherein:
the outer peripheral walls (44) have a height lower than a height of the inner peripheral walls (43).

5. The reactor according to any one of claims 1 to 4, wherein:
fixing means (70) are provided on both outer sides in the axial direction of the pair of plate-shaped cores (60), and
the columnar core bodies (29), the coils (30), the bobbin (40), and the plate-shaped cores (60) are sandwiched by the pair of fixing means (70).

## Patentansprüche

1. Reaktor bzw. Drosselspule (10), aufweisend:
ein Paar säulenartige Kernkörper (20), welches aus einem magnetischen Material gebildet ist; ein Paar Spulen (30), welches an äußeren Umfangsseiten der säulenartigen Kernkörper (20) angeordnet ist und durch Wicklung eines flachen Drahtes (31) gebildet ist; und
einen Spulenkörper (40), aufweisend: innere Umfangswände (43) zum Abteilen eines zentralen Lochs (40a1); äußere Umfangswände (44), welche an äußeren Umfangsseiten von den inneren Umfangswänden (43) vorgesehen sind und den inneren Umfangswänden (43) jeweils zugewandt sind; und Bodenwände (45), welche die inneren Umfangswände (43) und die äußeren Umfangswände (44) verbinden, um dadurch einen ersten ringförmigen Nutabschnitt (41) und einen zweiten ringförmigen Nutabschnitt (42) zu bilden, welcher jeweils eine kreisförmige Form darin für das Paar Spulen (30) aufweist, welches jeweils in dem ersten ringförmigen Nutabschnitt (41) und dem zweiten ringförmigen Nutabschnitt (42) einzupassen ist,
welcher **dadurch gekennzeichnet ist, dass**:
ausgesparte Wandabschnitte (50), welche jeweils eine zur Zentrumsseite des Spulenkörpers (40) ausgesparte Form aufweisen, an einem Abschnitt der äußeren Umfangswände (44) vorgesehen sind, wo der erste ringförmige Nutabschnitt (41) und der zweite ringförmige Nutabschnitt (42) einander zugewandt sind, und
die ausgesparten Wandabschnitte (50) jeweils an einer Seite näher zum Zentrum als zumindest ein Teil der inneren Umfangswände (43) positioniert sind.

2. Reaktor nach Anspruch 1, wobei:
plattenförmige Kerne (60), welche jeweils aus einem magnetischen Material gebildet sind und eine größere Fläche als die säulenartigen Kernkörper aufweisen, auf die säulenartige Kernkörper (20) aufgesteckt sind, um die säulenartigen Kernkörper (20) von beiden äußeren Seiten davon in einer axialen Richtung zwischen sich zu legen, und
Positionierungsvorsprünge (51) an einer dem ersten ringförmigen Nutabschnitt (41) und dem zweiten ringförmigen Nutabschnitt (42) der Bodenwände (45) gegenüberliegenden Seite vorgesehen sind, welche mit den plattenförmigen Kernen (60) in Kontakt kommen und die plattenförmigen Kerne (60) von den Spulen (30) trennen.

3. Reaktor nach Anspruch 1 oder 2, wobei:
ein Metallgehäuse (80) vorgesehen ist, um die säulenartigen Kernkörper (20), die Spulen (30) und den Spulenkörper (40) abzudecken, und
äußere Umfangsvorsprünge (48) an den äußeren Umfangswänden (44) jeweils vorgesehen sind, welche in einer entgegengesetzten Richtung von den inneren Umfangswänden (43) vorspringen, um die Spulen (30) von dem Gehäuse (80) zu trennen.

4. Reaktor nach einem der Ansprüche 1 bis 3, wobei:
die äußeren Umfangswände (44) eine Höhe aufweisen, welche geringer ist als eine Höhe der inneren Umfangswände (43).

5. Reaktor nach einem der Ansprüche 1 bis 4, wobei:
Befestigungsmittel (70) an beiden äußeren Seiten in der axialen Richtung des Paares von plattenförmigen Kernen (60) vorgesehen sind, und
die säulenartigen Kernkörper (20), die Spulen (30), der Spulenkörper (40) und die plattenförmigen Kerne (60) durch die Befestigungsmittel (70) zwischen sich gelegt sind.

## Revendications

1. Un réacteur ou bobbine de réactance comprenant :
une paire de corps formant noyau en colonnes (20) composés d'un matériau magnétique ;
une paire d'enroulements (30) disposés sur des côtés périphériques externes des corps formant noyau en colonnes (20) et formés en enroulant un fil plat (31) ; et
une bobine (40) comprenant : des parois périphériques internes (43) destinées à partitionner un trou central (40a1) ; des parois périphériques externes (44) disposées sur des côtés périphériques externes depuis les parois périphériques internes (43) et faisant face aux parois périphériques internes (43) respectivement ; et des parois inférieures (45) couplant les parois périphériques internes (43) et les parois périphériques externes (44), afin de former une première section de rainure annulaire (41) et une seconde section de rainure annulaire (42), chacune présentant une forme circulaire, de sorte à ce que la première paire d'enroulements (30) puisse s'insérer dans la première section de rainure annulaire (41) et la seconde section de rainure annulaire (42), respectivement,
ce qui est **caractérisé en ce que** :
des sections de parois en retrait (50), chacune présentant une forme enfoncée dans la direction du côté central de la bobine (40), sont disposées sur une section des parois périphériques externes (44) où la première section de rainure annulaire (41) et la seconde section de rainure annulaire (42) se font face, et
les sections de parois en retrait (50) sont toutes positionnées sur un côté plus proche du centre qu'au moins une partie des parois périphériques internes (43).

2. Le réacteur selon la Revendication 1, étant précisé que :
des coeurs en forme de plaque (60), chacun étant composé d'un matériau magnétique et chacun présentant une surface plus grande que les corps formant noyau en colonnes (20), sont empilés sur les corps formant noyau en colonnes (20) afin de prendre en sandwich les corps formant noyau en colonnes (20) entre les deux côtés externes de ceux-ci dans une direction axiale, et
des projections de positionnement (51) sont prévues sur un côté opposé à la première section de rainure annulaire (41) et la seconde section de rainure annulaire (42) des parois inférieures (45), étant en contact avec les coeurs en forme de plaque (60) et séparant les coeurs en forme de plaque (60) des enroulements (30).

3. Le réacteur selon la Revendication 1 ou 2, étant précisé que :
un boîtier métallique (80) est prévu pour couvrir les corps formant noyau en colonnes (20), les enroulements (30), et la bobine (40), et
des projections périphériques externes (48) sont prévues sur les parois périphériques externes (44) respectivement, se projetant dans une direction qui s'éloigne des parois périphériques externes (43) afin de séparer les bobines (30) du boîtier (80).

4. Le réacteur selon l'une quelconque des Revendications 1 à 3, étant précisé que :
les parois périphériques externes (44) présentent une hauteur inférieure à une hauteur des parois périphériques internes (43).

5. Le réacteur selon l'une quelconque des Revendications 1 à 4, étant précisé que :
des moyens de fixation (70) sont prévus sur les deux côtés externes dans une direction axiale de la paire de coeurs en forme de plaque (60), et
les corps formant noyau en colonnes (20), les enroulements (30) et la bobine (40), et les coeurs en forme de plaque (60) sont pris en sandwich par la paire de moyens de fixation (70).
